# EUROPÄISCHE PATENTSCHRIFT

(11) **EP 1 374 357 B1**
(45) Veröffentlichungstag und Bekanntmachung des Hinweises auf die Patenterteilung: **09.03.2005**
(21) Anmeldenummer: 02730034.2
(22) Anmeldetag: 20.03.2002
(51) Int. Cl.: H02B 1/28

(54) **BRANDSCHUTZSCHRANKANORDUNG**
FIRE PROTECTION CABINET ASSEMBLY
DISPOSITIF D'ARMOIRES ANTIFEU

(30) Priorität: 20.03.2001 DE 10113625
(43) Veröffentlichungstag der Anmeldung: 02.01.2004
(73) Patentinhaber: Lampertz GMBH & CO. KG, 57584 Wallmenroth (DE)
(72) Erfinder: KIEFEL, Achim, 57520 Derschen (DE); WELLER, Thorsten, 57586 Weitefeld (DE); SABROWSKI, Uwe, 33378 Rheda-Wiedenbrück (DE)
(74) Vertreter: Fleck, Hermann-Josef, Dr.-Ing.
(86) Internationale Anmeldenummer: PCT/EP2002/003112
(87) Internationale Veröffentlichungsnummer: WO 2002/075882

(56) Entgegenhaltungen:
- DE-A- 19 855 931

## Beschreibung

Die Erfindung bezieht sich auf eine Brandschutzschrankanordnung mit mehreren aneinander gereihten Brandschutzschränken, die als brandschutzsichere Wandelemente eine Fronttür, ein Dachelement, ein Bodenelement, eine Rückwand oder Rücktür und zumindest einen um die Fronttür und gegebenenfalls um die Rücktür verlaufenden Rahmen mit zumindest vertikalen Rahmenelementen aufweisen, wobei die den seitlichen Abschluss bildenden Brandschutzschränke auf ihren freien seitlichen Außenseiten mit ebenfalls brandschutzsicheren Seitenwänden versehen sind und im Bereich von Stoßflächen der aneinander gereihten Brandschutzschränke Abdichtmittel angeordnet sind.

Eine derartige Brandschutzschrankanordnung ist in der DE 198 55 931 A1 angegeben. Die einzelnen, aneinander gereihten Brandschutzschränke weisen brandschutzsichere Wandelemente mit zwischen einer Blech-Außenverkleidung und Blech-Innenverkleidung angeordnetem, geschichtenem Brandschutzmaterial auf, das bei einem Brand über eine von einer Norm vorgeschriebene Zeitdauer einer übermäßigen Wärmeentwicklung im Schrankinneren entgegen wirkt, so dass insbesondere in dem Schrank vorgesehene elektronische Einrichtungen unbeschädigt bleiben. Die Stoßstellen zwischen den Wandelementen, wie Seitenelementen, an diese angrenzenden Rahmenelementen, Bodenelement und Dachelement sind mit Dichtungselementen abgedichtet, die für einen Feuerschutz hochtemperaturfest sind. Hinsichtlich einer Abdichtung zwischen aneinander gereihten Schränken sind keine Ausführungen gemacht.

In der DE 33 44 598 C1 ist beschrieben, zwischen aneinander gereihten Schaltschränken, allerdings nicht Brandschutzschränken, an aufeinander stoßenden Rahmenschenkeln z.B. H-förmige Dichtungselemente einzubringen.

Der Erfindung liegt die Aufgabe zugrunde, eine Brandschutzschrankanordnung der eingangs genannten Art bereit zu stellen, bei der insbesondere auch an den Stoßflächen der aneinander gereihten Schutzschränke eine hohe Brandschutzsicherheit gewährleistet ist.

Diese Aufgabe wird mit den Merkmalen des Anspruches 1 gelöst. Hiernach ist vorgesehen, dass die brandschutzsicheren Abdichtmittel umlaufend zwischen den Stoßflächen angeordnete Dichtungssätze und auf der Innenseite auf die Stoßstellen aufgelegte und diese seitlich überragende brandschutzsichere Dichtungsmodule mit Brandschutzmaterial aufweisen, die beidseitig der Stoßstellen mittels Koppelmitteln mit den angrenzenden Wandelementen verbunden sind.

Mit diesen Maßnahmen wird eine zuverlässige brandschutzsichere Abdichtung insbesondere auch an den Stoßstellen der aneinander gereihten Schutzschränke gewährleistet.

Bei einfachem Aufbau wird eine zuverlässige Hitzeabschirmung dadurch sichergestellt, dass die Wandelemente jeweils kassettenartig mit einer Blech-Innenverkleidung und einer Blech-Außenverkleidung und mindestens einer dazwischen aufgenommenen Schicht aus Brandschutzmaterial ausgebildet sind.

Sowohl zum Einsetzen der Seitenwände als auch der Fronttür und Rücktür oder Rückwand können einfache, leicht abzudichtende Übergänge dadurch gebildet werden, dass die vertikalen Rahmenelemente im Querschnitt winkelförmig ausgebildet sind und an ihren den Seitenwänden zugeordneten Schenkeln mittels Verbindungsmitteln miteinander verbunden sind. insbesondere im Bereich von Türen, gewünschtenfalls aber auch im Bereich der Seitenwände können die Rahmen auch untere und/oder obere horizontale Rahmenelemente aufweisen. Die Verbindungnsmittel im Bereich der Schenkel der winkelförmigen Rahmenelemente, z.B. eine durchgehende Gewindestange mit seitlich aufgedrehten Schrauben ergibt eine stabile, klemmende Verbindung, die auch hohen Kräften bei Hitzeentwicklung Stand hält.

Eine einfache, stabile Verbindung der Wandelemente untereinander sowie auch der Dichtungsmodulen mit den Wandelementen im Bereich der Stoßstellen wird dadurch erreicht, dass in die den Seitenwänden zugekehrten Stoßflächen der vertikalen Eckelemente und/oder der Bodenelemente und Dachelemente Teile von Drehriegelverschlüssen eingesetzt sind, die zum Verspannen mit eingesetzten Seitenwänden oder den auf die Stoßflächen aufgesetzten Dichtungsmodulen in in diesen an gegenüberliegenden Stellen eingesetzte weitere Teile der Drehriegelverschlüsse in Eingriff gebracht oder bringbar sind und dass auch zwischen den Stoßflächen der vertikalen Eckelemente, der Dachelemente und der Bodenelemente und den angrenzenden Flächen der Seitenwände Dichtungssätze angeordnet sind. Die Drehriegelverschlüsse werden dabei doppelt genutzt.

Ist vorgesehen, dass die Dichtungssätze eine sich bei Hitzeentwicklung aufblähende Brandschutzdichtung und zur Außenseite der Schaltschrankanordnung eine Feuchtigkeitsdichtung aufweisen, so wird im Bereich der Stoßflächen ebenfalls eine brandschutzsichere Dichtung erzielt, durch die ein Eindringen von Brandgasen und auch von Feuchtigkeit in den Innenraum verhindert wird.

Eine einfache Montage wird weiterhin dadurch begünstigt, dass die Dichtungsmodule eine äußere Blechverkleidung mit C-förmigem Querschnitt aufweisen, wobei von einer zum Innenraum der Schaltschrankanordnung hin angeordneten Basisfläche seitliche Schenkel rechtwinklig abgekantet und von diesen wiederum flanschartige, mit ihren freien Enden gegeneinander gerichtete Endschenkel rechtwinklig abgebogen sind, und dass in dem Innenraum der Blechverkleidung mindestens eine Schicht aus Brandschutzmaterial angeordnet ist. Die Dichtungsmodule können leicht hergestellt und an den Stoßstellen des Schutzschrankes angebracht werden.

Die Maßnahmen, dass die vertikalen Eckelemente zumindest im Bereich ihrer den Seitenwänden zugekehrten Längsränder und die Bodenelemente und die Dachelemente zumindest im Bereich ihrer aneinander grenzenden Seitenränder über die Dicke dieser Wandelemente in der Weise mit einem Absatz versehen sind, dass sich bei der Anreihung U-förmige Räume bilden, und dass in die U-förmigen Räume zumindest eine Schicht aus Brandschutzmaterial eingelegt ist, ergeben nicht nur ein einfaches, eindeutiges Anordnen von Seitenwandelementen, Dachelementen, Bodenelementen und gegebenenfalls Rückwandelementen, sondern der dabei bei Anreihung entstehende U-förmige Raum wird auch sicher abgedichtet.

Ein zuverlässiger Brandschutz wird weiterhin dadurch begünstigt, dass die Wandelemente von außen nach innen eine erste Schicht eines ersten Brandschutzmaterials, eine zweite Schicht eines zweiten Brandschutzmaterials und eine dritte Schicht eines dritten Brandschutzmaterials aufweisen und dass die Dichtungsmodule in ihrem Inneren bezüglich der Schrankanordnung von außen nach innen zumindest eine Schicht des zweiten Brandschutzmaterials und eine weitere Schicht des dritten Brandschutzmaterials aufweisen, wobei die einzelnen Schichten zur Hitzeabschirmung vorteilhaft aufeinander abgestimmt werden können und bei vorgegebener Hitzeabschirmung eine möglichst geringe Wandstärke für eine einfache Montage und möglichst geringen Raumbedarf ermöglicht wird.

Eine zuverlässige Abdichtung wird dabei dadurch unterstützt, dass die in die U-förmigen Räume eingelegte Schicht aus dem ersten Brandschutzmaterial besteht und dass zwischen der eingelegten Schicht und der benachbarten Fläche der Wandelemente über die Länge der Fläche und im Querschnitt zumindest abschnittsweise über die Fläche sich bei Hitzeeinwirkung aufblähende Brandschutzdichtungen eingelegt sind.

Ist vorgesehen, dass die aneinander grenzenden Stoßflächen der Bodenelemente und der Dachelemente mit vertikal nach oben bzw. vertikal nach unten gerichteten freien Endabschnitten versehen sind, so lassen sich auch die Bodenelemente und Dachelemente einfach an den Endabschnitten miteinander verbinden. Darüber hinaus dienen die Endabschnitte bei eingesetzten Seitenwänden oder Rückwänden zu deren Fixierung. Die in die U-förmigen Räume eingelegte Schicht ist im Bereich der Endabschnitte ausgespart.

Die Erfindung wird nachfolgend anhand eines Ausführungsbeispiels unter Bezugnahme auf die Zeichnungen näher erläutert. Es zeigen:
- Fig. 1: eine teilweise aufgebrochene Anordnung einer Brandschutzschrankanordnung von vorn,
- Fig. 2: die Brandschutzschrankanordnung von oben,
- Fig. 3: einen Querschnitt eines Ausschnitts der Schrankanordnung im Bereich einer Stoßfläche von vertikalen Eckelementen und
- Fig. 4: einen Querschnitt eines Ausschnitts der Schrankanordnung im Bereich aneinander stoßender Bodenelemente.

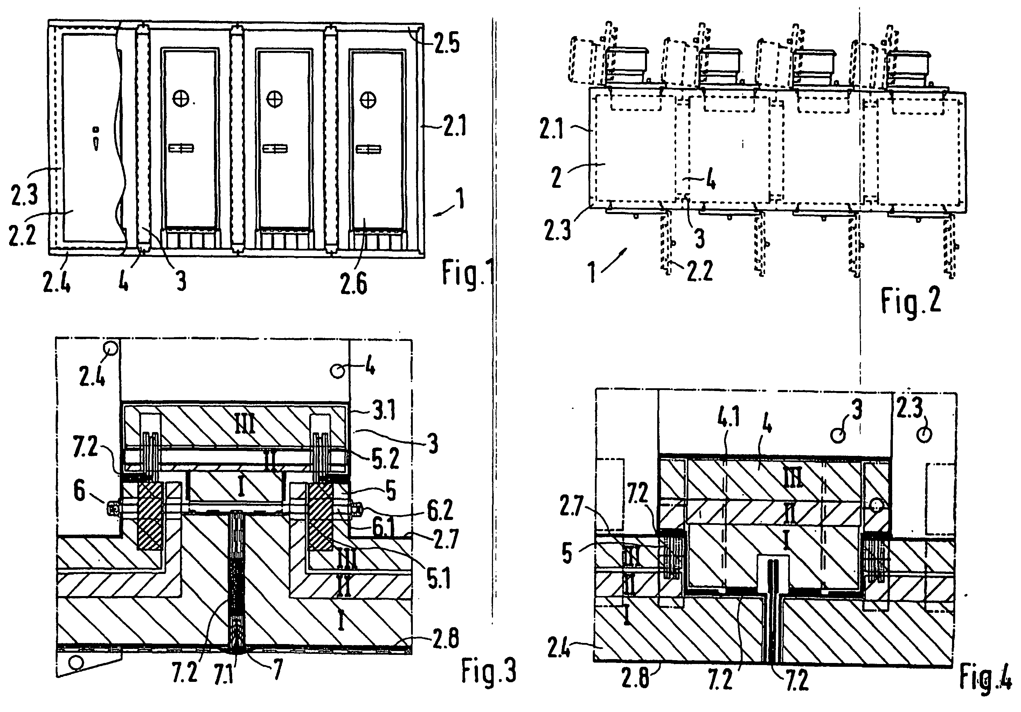

Fig. 1 zeigt eine Brandschutzschrankanordnung 1 mit vier aneinander gereihten Schutzschränken 2. Die Schutzschränke 2 weisen jeweils eine Fronttür 2.2, vertikale Rahmenelemente 2.3, ein Bodenelement 2.4, ein Dachelement 2.5 und eine Rückwand oder Rücktür 2.6 auf. Die beiden den seitlichen Abschluss bildenden Schutzschränke 2 sind auf der Außenseite der Schrankanordnung mit Seitenwänden 2.1 versehen, die, wie bei dem in Fig. 1 rechten Schrank ersichtlich, über ihre Dicke am Rand oben und unten sowie auch (an den nicht dargestellten) vertikalen Rändern über ihre Dicke abgesetzt und in daran angepasste Absätze an den Rändern des zugeordneten Bodenelementes 2.4, des Dachelementes 2.5 sowie den vertikalen Rahmenelementen 2.3 eingesetzt sind. Im Bereich der Stoßstellen der aneinander gereihten Schränke sind vertikale Dichtungsmodule 3 und horizontale Dichtungsmodule 4 angeordnet, um eine zuverlässige Abdichtung der Stoßstellen in einem Brandfall zu gewährleisten.

Die Wandelemente, d.h. die Seitenwand 2.1, die Fronttür 2.2, die Rahmenelemente 2.3, das Bodenelement 2.4, das Dachelement 2.5 und die Rückwand oder Rücktür 2.6, weisen eine zum Schaltschrankinneren gerichtete Innenverkleidung aus Blech und auf ihrer Außenseite eine Außenverkleidung 2.8 aus Blech auf und nehmen zwischen sich z.B. drei Schichten I, II, III (vgl. Fig. 3 und 4) aus aufeinander abgestimmtem Brandschutzmaterial auf, das auch bei verhältnismäßig dünnem Aufbau der Wände eine zuverlässige Hitzeabschirmung entsprechend einer Norm über eine vorgeschriebene Zeit sicherstellt. Die vertikalen Rahmenelemente 2.3 sind als Eckelemente ausgeführt und besitzen einen winkelförmigen bzw. L-förmigen Querschnitt, wie aus den Fig. 2 und 3 ersichtlich. Zum Festlegen der zwischen den Rahmenelementen 2.3, dem Bodenelement 2.4 und dem Dachelement 2.5 eingesetzten Seitenwände 2.1 sind in den einander zugekehrten Stoßflächen, und zwar auf dem zum Inneren des Schutzschrankes liegenden Absatzbereich, Teile 5.1 bzw. 5.2 von Drehriegelverschlüssen 5 eingesetzt, mit denen eine einfache, und schnelle Verspannung erreicht wird, wie in der eingangs angegebenen Druckschrift DE 198 55 931 A1 näher erläutert.

Auch in den vertikalen und horizontalen Dichtungsmodulen 3, 4 sind entsprechende Teile 5.2 der Drehriegelverschlüsse 5 an entsprechenden Positionen angeordnet, so dass die vertikalen und horizontalen Dichtungsmodule 3, 4 unter Ausnutzung der Drehriegelverschlüsse einfach und stabil entlang der Stoßflächen, diese übergreifend auf der Innenseite der Schutzschrankanordnung festgespannt werden können, wie in den Fig. 3 und 4 dargestellt. Die Dichtungsmodulen 3, 4 haben dabei eine Breite, die der doppelten Stärke z.B. der Seitenwände 2.1 einschließlich des mit einem Dichtungssatz 7 ausgefüllten Spalts zwischen den Stoßflächen der aneinander gereihten Schränke entspricht, so dass sie in etwa bündig mit den Innenverkleidungen 2.7 der Rahmenelemente 2.3 bzw. einer gedachten Aufsetzlinie der Seitenwände 2.1 auf dem Bodenelement 2.4 bzw. Dachelement 2.5 liegen und eine gute und dabei nicht störende brandschutzsichere Abdichtung ergeben.

Zwischen den Stoßflächen der aneinander gereihtan Schutzschränke 2 sind die Dichtungssätze 7 eingesetzt, die zumindest zwischen den vertikalen und den oberen, in Tiefenrichtung verlaufenden Stoßflächen nach außen hin elastische Dichtungselemente 7.1 mit auf der Außenverkleidung 2.8 beiderseits aufliegenden Dichtungsabschnitten sowie weiter zum Inneren hin Brandschutzdichtungen 7.2 aufweisen, die sich bei Hitzeeinwirkung aufblähen und eine sichere Abdichtung gegen Brandgase auch bei Verziehungen der Wandelemente gewährleisten. Wie Fig. 4 zeigt, können auf der Unterseite die einen Feuchtigkeitsschutz bildenden Dichtungselemente 7.1 fehlen. Im Bereich der seitlichen Schenkel der L-förmigen Rahmenelemente 2.3 sind zudem Verbindungsmittel 6 z.B. in Form von durchgehenden Gewindestangen 6.1 eingesetzt, auf deren über die beiderseitigen Innenverkleidungen 2.7 herausragenden freien Enden zum Verspannen Muttern 6.2 aufgedreht werden.

Wie aus Fig. 4 ersichtlich, sind die senkrechten Stoßflächen der Bodenelemente 2.4 und der Dachelemente 2.5 über die Stärke des äußeren Absatzbereiches hinaus sich einander zugekehrt verlängert und bilden U-artige Aufnahmen zum Einsetzen der Seitenwände 2.1. Die verlängerten Endabschnitte können auch zum zusätzlichen Verbinden der aneinander gereihten Schutzschränke 2 im Boden- und Deckbereich genutzt werden.

Die vertikalen Dichtungsmodulen 3 sowie die horizontalen Dichtungsmodulen 4 weisen im Querschnitt C-förmig gebogene Blechverkleidungen 3.1 auf, in deren Innenraum von der Außenseite der Schutzschrankanordnung 1 aus gesehen eine Schicht II und eine Schicht III aus entsprechenden Brandschutzmaterialien wie die Schichten II und III der Wandelemente angeordnet sind. In den durch die Absätze beim Aneinanderreihen der Schutzschränke 2 entstehenden U-förmigen Raum ist jeweils eine weitere Schicht I des entsprechenden Brandschutzmaterials wie in den Wandelementen eingesetzt, wie die Fig. 3 und 4 zeigen. Zwischen den flanschartig ausgebildeten, gegeneinander gerichteten Endabschnitten der im Querschnitt C-förmigen Endabschnitte der Blechverkleidung 3.1 bzw. 4.1 und den benachbarten Randbereichen der Rahmenelemente 2.3 bzw. Bodenelemente 2.4 und Dachelemente 2.5 sind sich bei Hitzeeinwirkung aufblähende weitere Brandschutzdichtungen 7.2 eingelegt. Desgleichen sind derartige Brandschutzdichtungen 7.2 auch in dem U-förmigen Raum zwischen der eingelegten Schicht I aus Brandschutzmaterial und den angrenzenden Flächen der Wandelemente eingelegt, so dass auch in diesem Bereich bei Hitzeentwicklung eine sichere Abdichtung gegen den Eintritt von Brandgasen gewährleistet wird.

## Patentansprüche

1. Brandschutzschrankanordnung (1) mit mehreren aneinander gereihten Brandschutzschränken (2), die als brandschutzsichere Wandelemente eine Fronttür (2.2), ein Dachelement (2.5), ein Bodenelement (2.4), eine Rückwand (2.6) oder Rücktür und zumindest einen um die Fronttür (2.2) und gegebenenfalls um die Rücktür verlaufenden Rahmen mit zumindest vertikalen Rahmenelementen (2.3) aufweisen, wobei die den seitlichen Abschluss bildenden Brandschutzschränke (2) auf ihren freien seitlichen Außenseiten mit ebenfalls brandschutzsicheren Seitenwänden (2.1) versehen sind und im Bereich von Stoßflächen der aneinander gereihten Brandschutzschränke (2) umlaufend brandschutzsichere Abdichtmittel angeordnet sind,
**dadurch gekennzeichnet,**
**dass** die brandschutzsicheren Abdichtmittel umlaufend zwischen den Stoßflächen angeordnete Dichtungssätze (7) und auf der Innenseite auf die Stoßstellen aufgelegte und diese seitlich überragende brandschutzsichere Dichtungsmodule (3, 4) mit Brandschutzmaterial aufweisen, die beidseitig der Stoßstellen mittels Koppelmitteln (5) mit den angrenzenden Wandelementen verbunden sind.

2. Anordnung nach Anspruch 1,
**dadurch gekennzeichnet,**
**dass** die Wandelemente jeweils kassettenartig mit einer Blech-Innenverkleidung (2.7) und einer Blech-Außenverkleidung (2.8) und mindestens einer dazwischen aufgenommenen Schicht (I, II, III) aus Brandschutzmaterial ausgebildet sind.

3. Anordnung nach Anspruch 1 oder 2,
**dadurch gekennzeichnet,**
**dass** die vertikalen Rahmenelemente (2.3) im Querschnitt winkelförmig ausgebildet sind und an ihren den Seitenwänden (2.1) zugeordneten Schenkeln mittels Verbindungsmitteln (6) miteinander verbunden sind.

4. Anordnung nach einem der vorhergehenden Ansprüche,
**dadurch gekennzeichnet,**
**dass** in die den Seitenwänden (2.1) zugekehrten Stoßflächen der vertikalen Eckelemente (2.3) und/oder der Bodenelemente (2.4) und Dachelemente (2.5) Teile (5.1) von Drehriegelverschlüssen eingesetzt sind, die zum Verspannen mit eingesetzten Seitenwänden (2.1) oder den auf die Stoßflächen aufgesetzten Dichtungsmodulen (3, 4) in in diesen an gegenüberliegenden Stellen eingesetzte weitere Teile (5.2) der Drehriegelverschlüsse in Eingriff gebracht oder bringbar sind und
**dass** auch zwischen den Stoßflächen der vertikalen Eckelemente (2.3), der Dachelemente (2.5) und der Bodenelemente (2.4) und den angrenzenden Flächen der Seitenwände (2.1) Dichtungssätze (7) angeordnet sind.

5. Anordnung nach einem der vorhergehenden Ansprüche,
**dadurch gekennzeichnet,**
**dass** die Dichtungssätze (7) eine sich bei Hitzeentwicklung aufblähende Brandschutzdichtung (7.2) und zur Außenseite der Schaltschrankanordnung (1) eine Feuchtigkeitsdichtung (7.1) aufweisen.

6. Anordnung nach einem der vorhergehenden Ansprüche,
**dadurch gekennzeichnet,**
**dass** die Dichtungsmodule (3, 4) eine äußere Blechverkleidung (3.1, 4.1) mit C-förmigem Querschnitt aufweisen, wobei von einer zum Innenraum der Schaltschrankanordnung (1) hin angeordneten Basisfläche seitliche Schenkel rechtwinklig abgekantet und von diesen wiederum flanschartige, mit ihren freien Enden gegeneinander gerichtete Endschenkel rechtwinklig abgebogen sind, und
**dass** in dem Innenraum der Blechverkleidung (3.1, 4.1) mindestens eine Schicht (I, II, III) aus Brandschutzmaterial angeordnet ist.

7. Anordnung nach einem der vorhergehenden Ansprüche,
**dadurch gekennzeichnet,**
**dass** die vertikalen Eckelemente (2.3) zumindest im Bereich ihrer den Seitenwänden (2.1) zugekehrten Längsränder und die Bodenelemente (2.4) und die Dachelemente (2.5) zumindest im Bereich ihrer aneinander grenzenden Seitenränder in Dickenrichtung dieser Wandelemente in der Weise mit einem Absatz versehen sind, dass sich bei der Anreihung U-förmige Räume bilden, und
**dass** in die U-förmigen Räume zumindest eine Schicht (I) aus Brandschutzmaterial eingelegt ist.

8. Anordnung nach Anspruch 6 oder 7,
**dadurch gekennzeichnet,**
**dass** die Wandelemente von außen nach innen eine erste Schicht (I) eines ersten Brandschutzmaterials, eine zweite Schicht (II) eines zweiten Brandschutzmaterials und eine dritte Schicht (III) eines dritten Brandschutzmaterials aufweisen und
**dass** die Dichtungsmodule (3, 4) in ihrem Inneren bezüglich der Schrankanordnung (1) von außen nach innen zumindest eine Schicht (II) des zweiten Brandschutzmaterials und eine weitere Schicht (III) des dritten Brandschutzmaterials aufweisen.

9. Anordnung nach Anspruch 7 oder 8,
**dadurch gekennzeichnet,**
**dass** die in die U-förmigen Räume eingelegte Schicht (I) aus dem ersten Brandschutzmaterial besteht und
**dass** zwischen der eingelegten Schicht (I) und der benachbarten Fläche der Wandelemente über die Länge der Fläche und im Querschnitt zumindest abschnittsweise über die Fläche sich bei Hitzeeinwirkung aufblähende Brandschutzdichtungen (7.2) eingelegt sind.

10. Anordnung nach einem der vorhergehenden Ansprüche,
**dadurch gekennzeichnet,**
**dass** die aneinander grenzenden Stoßflächen der Bodenelemente (2.4) und der Dachelemente (2.5) mit vertikal nach oben bzw. vertikal nach unten gerichteten freien Endabschnitten versehen sind.

## Claims

1. Fire protection cabinet assembly (1) comprising a number of lined-up fire protection cabinets (2) which have, as fireproof wall elements, a front door (2.2), a ceiling element (2.5), a floor element (2.4), a rear wall (2.6) or rear door and at least one frame which has at least vertical frame elements (2.3) and extends around the front door (2.2) and possibly around the rear door, the fire protection cabinets (2) which form the lateral termination being provided on their free lateral exteriors with side walls (2.1) which are also fireproof, and fireproof sealing means being arranged circumferentially in the region of abutting surfaces of the lined-up fire protection cabinets (2),
**characterised in that**
the fireproof sealing means have sealing sets (7) arranged on the periphery between the abutting surfaces, and, on the interior, fireproof sealing modules (3, 4) containing fireproof material, which are placed on the abutting locations and protrude laterally beyond same and which are connected by coupling means (5) to the adjacent wall elements on both sides of the abutting locations.

2. Assembly according to claim 1, **characterised in that** the wall elements are in each case formed cassette-like with an inner sheet-metal lining (2.7) and an outer sheet-metal lining (2.8) and at least one layer (I, II, III) of fireproof material received between the two linings.

3. Assembly according to claim 1 or 2, **characterised in that** the vertical frame elements (2.3) have an angular cross-section and are connected to one another by connecting means (6) at their legs associated with the side walls (2.1).

4. Assembly according to one of the preceding claims, **characterised in that** parts (5.1) of espagnolette locks are inserted into the abutting surfaces, facing the side walls (2.1), of the vertical corner elements (2.3) and/or of the floor elements (2.4) and the ceiling elements (2.5), which parts (5.1), for bracing with inserted side walls (2.1) or with the sealing modules (3,4) placed on the abutting surfaces, are or may be engaged in further parts (5.2) of the espagnolette locks inserted in the sealing modules at opposite locations, and
**in that** sealing sets (7) are also arranged between the abutting surfaces of the vertical corner elements (2.3), the ceiling elements (2.5) and the floor elements (2.4) and the adjacent surfaces of the side walls (2.1).

5. Assembly according to one of the preceding claims, **characterised in that** the sealing sets (7) have a fireproof seal (7.2), which inflates when heat develops, and a moisture seal (7.1) towards the outside of the switchgear cabinet assembly (1).

6. Assembly according to one of the preceding claims, **characterised in that** the sealing modules (3, 4) have an outer sheet-metal lining (3.1, 4.1) of C-shaped cross-section, lateral legs being canted at a right angle from a base surface disposed towards the interior of the switchgear cabinet assembly, and from these legs in turn, flange-like end members, which are oriented towards one another with their free ends, are bent at a right angle, and
**in that** at least one layer (I, II, III) of fireproof material is arranged in the interior of the sheet-metal lining (3.1, 4.1).

7. Assembly according to one of the preceding claims, **characterised in that** the vertical corner elements (2.3) are provided with a shoulder at least in the region of their longitudinal edges facing the side walls (2.1), and the floor elements (2.4) and the ceiling elements (2.5) are provided with a shoulder at least in the region of their adjoining lateral edges in the thickness direction of these wall elements, in such a way that U-shaped spaces are formed when the cabinets are lined up, and
**in that** at least one layer (I) of fireproof material is inserted into the U-shaped spaces.

8. Assembly according to claim 6 or 7, **characterised in that** the wall elements have, from the outside inwards, a first layer (I) of a first fireproof material, a second layer (II) of a second fireproof material and a third layer (III) of a third fireproof material, and
**in that** the sealing modules (3, 4) have in their interior, from the outside inwards with respect to the cabinet assembly (1), at least one layer (II) of the second fireproof material and a further layer (III) of the third fireproof material.

9. Assembly according to claim 7 or 8, **characterised in that** the layer (I) inserted into the U-shaped spaces consists of the first fireproof material, and
**in that** fireproof seals (7.2), which inflate when heat develops, are placed between the inserted layer (I) and the adjacent surface of the wall elements over the length of the surface and at least intermittently in the cross-section over the surface.

10. Assembly according to one of the preceding claims, **characterised in that** the abutting surfaces adjoining one another of the floor elements (2.4) and of the ceiling elements (2.5) are provided with free end portions which are oriented vertically upwards or vertically downwards respectively.

## Revendications

1. Dispositif d'armoires coupe-feu (1) avec plusieurs armoires coupe-feu (2) rangées l'une contre l'autre, qui présentent, en tant qu'éléments de paroi ignifuges, une porte avant (2.2), un élément de toit (2.5), un élément de sol (2.4), une paroi arrière (2.6) ou porte arrière et au moins un châssis, passant autour de la porte avant (2.2) et le cas échéant autour de la porte arrière, avec au moins des éléments de châssis verticaux (2.3), les armoires coupe-feu (2), qui forment la bordure latérale, étant munies sur leurs faces extérieures latérales libres de parois latérales également ignifuges (2.1) et des moyens d'étanchéité ignifuges étant disposés en périphérie dans le secteur de surfaces d'impact des armoires coupe-feu (2), rangées l'une contre l'autre,
**caractérisé en ce**
**que** les moyens d'étanchéité ignifuges présentent des garnitures d'étanchéité (7), disposées en périphérie, entre les surfaces d'impact et appliquées côté intérieur, sur les points d'impact et que celles-ci présentent des modules d'étanchéité (3, 4) ignifuges, faisant saillie latéralement, avec un matériau pare-feu, modules qui sont reliés des deux côtés des points d'impact au moyen de systèmes de couplage (5), avec les éléments de paroi voisins.

2. Dispositif selon la revendication 1,
**caractérisé en ce**
**que** les éléments de paroi sont constitués respectivement sous forme de cassette avec un revêtement intérieur en tôle (2.7) et un revêtement extérieur en tôle (2.8) et au moins une couche (I, II, III), logée entre, en matériau pare-feu.

3. Dispositif selon la revendication 1 ou 2,
**caractérisé en ce**
**que** les éléments de châssis verticaux (2.3) sont constitués de manière angulaire en coupe transversale et sont reliés entre eux au moyen de systèmes de fixation (6) sur leurs montants, affectés aux parois latérales (2.1).

4. Dispositif selon l'une des revendications précédentes,
**caractérisé en ce**
**que**, dans les surfaces d'impact, tournées vers les parois latérales (2.1), des éléments d'angle verticaux (2.3) et / ou des éléments de sol (2.4) et des éléments de toit (2.5), des parties (5.1) de fermetures à loquet rotatif sont mises en oeuvre, qui sont mises en prise ou peuvent être mises en prise aux fins de tension avec des parois latérales (2.1) mises en oeuvre ou avec les modules d'étanchéité (3, 4), posés sur les surfaces d'impact, dans d'autres parties (5.2), mises en oeuvre en des points opposés dans ces modules d'étanchéité, des fermetures à loquet rotatif et
**que** des garnitures d'étanchéité (7) sont aussi disposées entre les surfaces d'impact des éléments d'angle verticaux (2.3), des éléments de toit (2.5) et des éléments de sol (2.4) et les surfaces voisines des parois latérales (2.1 ).

5. Dispositif selon l'une des revendications précédentes,
**caractérisé en ce**
**que** les garnitures d'étanchéité (7) présentent un joint pare-feu (7.2), qui gonfle en cas de dégagement de chaleur et un joint d'humidité (7.1), côté extérieur du dispositif d'armoires de distribution (1).

6. Dispositif selon l'une des revendications précédentes,
**caractérisé en ce**
**que** les modules d'étanchéité (3, 4) présentent un revêtement en tôle extérieur (3.1, 4.1) avec une section transversale en forme de C, des montants latéraux étant biseautés à angle droit à partir d'une surface de base, disposée vers l'espace intérieur du dispositif d'armoires de distribution (1) et des montants d'extrémité, de type bride, avec leurs extrémités libres orientées l'une contre l'autre, étant, à nouveau, pliés à angle droit à partir de ces montants latéraux et
**qu'**au moins une couche (I, II, III) en matériau pare-feu est disposée dans l'espace intérieur du revêtement en tôle (3.1, 4. 1 ).

7. Dispositif selon l'une des revendications précédentes,
**caractérisé en ce**
**que** les éléments d'angle verticaux (2.3) sont munis d'un retrait, au moins dans la zone de leurs bords longitudinaux, tournés vers les parois latérales (2.1) et les éléments de sol (2.4) et les éléments de toit (2.5) au moins dans la zone de leurs bords latéraux contigus, dans le sens de l'épaisseur de ces éléments de paroi, de sorte qu'il se forme des espaces en forme de U, lors de la jonction et
**qu'**au moins une couche (I) en matériau pare-feu est insérée dans les espaces en forme de U.

8. Dispositif selon la revendication 6 ou 7,
**caractérisé en ce**
**que** les éléments de paroi présentent, de l'extérieur vers l'intérieur, une première couche (I) dans un premier matériau pare-feu, une deuxième couche (II) dans un deuxième matériau pare-feu et une troisième couche (III) dans un troisième matériau pare-feu et
**que** les modules d'étanchéité (3, 4) présentent à l'intérieur, en ce qui concerne le dispositif d'armoires (1), de l'extérieur vers l'intérieur, au moins une couche (II) du deuxième matériau pare-feu et une autre couche (III) du troisième matériau pare-feu.

9. Dispositif selon la revendication 7 ou 8,
**caractérisé en ce**
**que** la couche (I), insérée dans les espaces en forme de U, se compose du premier matériau pare-feu et
**qu'**entre la couche insérée (I) et la surface voisine des éléments de paroi, sur la longueur de la surface et, en coupe transversale, au moins par segments sur la surface, des joints pare-feu (7.2) sont insérés, qui gonflent en cas de dégagement de chaleur.

10. Dispositif selon l'une des revendications précédentes,
**caractérisé en ce**
**que** les surfaces d'impact contiguës des éléments de sol (2.4) et des éléments de toit (2.5) sont munis de sections finales libres, dirigées verticalement vers le haut ou verticalement vers le bas.
